# EUROPEAN PATENT APPLICATION

(11) **EP 2 784 322 A1**
(43) Date of publication of application: **01.10.2014**
(21) Application number: 14153525.2
(22) Date of filing: 31.01.2014
(51) Int. Cl.: F04B 39/00, F04C 29/00, F04C 18/02

(54) **Refrigerant compressor**

(30) Priority: 29.03.2013 JP 2013071958
(71) Applicant: Hitachi, Ltd., Tokyo 100-8280 (JP)
(72) Inventor: Koyama, Masaki, Tokyo, 100-8280 (JP); Yanagase, Yuichi, Tokyo, 100-8280 (JP)
(74) Representative: MERH-IP Matias Erny Reichl Hoffmann

(57) **Abstract**

A refrigerant compressor includes a compressor mechanism part 2, and a motor and a crank shaft 101 for driving the compressor mechanism part, in a sealed case 100, and includes sliding bearings 103, 104, and 105 at least either in an engagement part between the compressor mechanism part and the crank shaft or in a rotation support part of the crank shaft. Further, an unleaded resin impregnation material is used for at least one of the sliding bearings, the crank shaft is made of a ferrous material, and a hard carbon film including hydrogen is formed on a part of the crank shaft sliding with the sliding bearing using the unleaded resin impregnation material.

## Description

### BACKGROUND OF THE INVENTION

### 1. Field of the Invention

The present invention relates to a refrigerant compressor for refrigeration/air-conditioning, and especially relates to a refrigerant compressor particularly suitable for a wide range drive scroll compressor operated from a low speed to a high speed.

### 2. Description of the Related Art

In a refrigerant compressor used for a refrigerating cycle such as an air-conditioner and a refrigerator, to prevent burning and abrasion in a high speed operation, a bearing material in which a surface material is adjusted has been developed for a bearing that supports a body of rotation of a motor and a compressor mechanism part.

In addition, in recent years, with an increased interest in reduction of energy consumption, efforts have been made to enhance high efficiency and to realize downsizing of a compressor used in the refrigerating cycle, especially in the air-conditioner.

The air-conditioner is often selected according to a maximum air-conditioning load of a space (room) to be air conditioned. In an actual operation, the air-conditioner is often operated in a low load area because of an effect of high thermal insulation of the building or heat generation from internal devices arranged in the room to be air conditioned. Further, a cooling operation with low ability is necessary at a low outdoor temperature.

Therefore, the compressor to be used for an air-conditioner is frequently operated in a low speed rotation area, and efforts have been made to develop a compressor capable of wide range drive from a low speed to a ultra-high speed equivalent to the maximum load of a conventional compressor by reducing a stroke volume, and capable of being operated at high efficiency in an actual operation.

Further, to enhance the efficiency in the low load area, an ultra-low speed operation compared with the minimum rotation speed (for example, 20 Hz) in a conventional compressor is realized, and efforts have been made to reduce a friction loss of a sliding portion such as a bearing in a low speed operation.

However, in the conventional compressor using a sliding bearing, when being operated at a low speed, an effect of dynamic pressure generation in a gap of the bearing becomes small and the oil film thickness becomes small accordingly, and the compressor can be easily transferred to a mixed lubrication area. Therefore, there is a problem that the friction coefficient in the bearing part is increased, and the friction loss cannot be decreased. In addition, it is necessary to enhance burning resistance and abrasion resistance in a bearing slide member.

Therefore, a compressor that realizes a low friction coefficient and enhances the abrasion resistance in a slide member inside the compressor has been proposed. For example, Japanese Patent Application Laid-Open No. 2012-36878 discloses a refrigerant compressor in which a rotation shaft rotatably supported by a sliding bearing is made of a ferrous material, hard coating having hardness of 1000 Hv or more is formed on a part sliding with a bearing of a rotation shaft, and an unleaded resin impregnation material is used for the sliding bearing.

### SUMMARY OF THE INVENTION

The compressor disclosed in Japanese Patent Application Laid-Open No. 2012-36878 has a configuration in which the rotation shaft that constitutes a sliding portion with the sliding bearing is made of a ferrous material, and the hard coating (thin film) is formed on a sliding surface, the unleaded resin impregnation material is used for the sliding bearing, and the hard coating has the hardness of 1000 Hv or more (favorably, 1500 to 3000 Hv). In addition, as the types of the hard coating, a chromium based film, a titanium based film, a hard carbon based film, and a Si contained hard carbon based film are disclosed.

However, it has been found out that, when the compressor is intended to operate in an operation range of a ultra-low speed where the rotation speed (operation frequency) is less than 20 Hz, the oil film thickness of a bearing becomes thinner, and the compressor is operated under the mixed lubrication condition where contact between the shaft and the bearing (solid contact) is started, and the friction coefficient is increased. Therefore, it has turned out that there is a problem, even if the electric power consumption is tried to be reduced by performing a ultra-low speed operation at the time of a low load, the friction coefficient of the bearing sliding portion is increased in the ultra-low speed operation and the friction loss becomes large, and the electric power consumption cannot be sufficiently decreased.

An object of the present invention is to reduce a friction loss in a low speed operation where a compressor is operated under a mixed lubrication condition, and especially, to obtain a highly efficient refrigerant compressor in a low speed operation.

In order to achieve the above object, the present invention provides a refrigerant compressor including: a compressor mechanism part, and a motor and a crank shaft for driving the compressor mechanism part, in a sealed case, and/or a sliding bearing at least either in an engagement part between the compressor mechanism part and the crank shaft or in a rotation support part of the crank shaft, wherein: an unleaded resin impregnation material is used for at least one of the sliding bearings, the crank shaft is made of a ferrous material, and/or a hard carbon film including hydrogen is formed on a part of the crank shaft sliding with the sliding bearing using the unleaded resin impregnation material.

According to a refrigerant compressor of the present invention, a friction loss in a low speed operation where the compressor enters a mixed lubrication area can be reduced. Therefore, there is an effect of obtaining a highly efficient refrigerant compressor especially in a low speed operation.

### BRIEF DESCRIPTION OF THE DRAWINGS

Fig. 1 is a vertical cross sectional view illustrating an embodiment 1 of a refrigerant compressor of the present invention;
Fig. 2 is an enlarged cross sectional view illustrating an enlarged II portion of Fig. 1;
Fig. 3 is a diagram illustrating comparison of frictional properties of bearing sliding portions; and
Fig. 4 is a diagram describing a relationship between hydrogen content and a friction coefficient of a DLC film.

### DESCRIPTION OF THE PREFERRED EMBODIMENTS

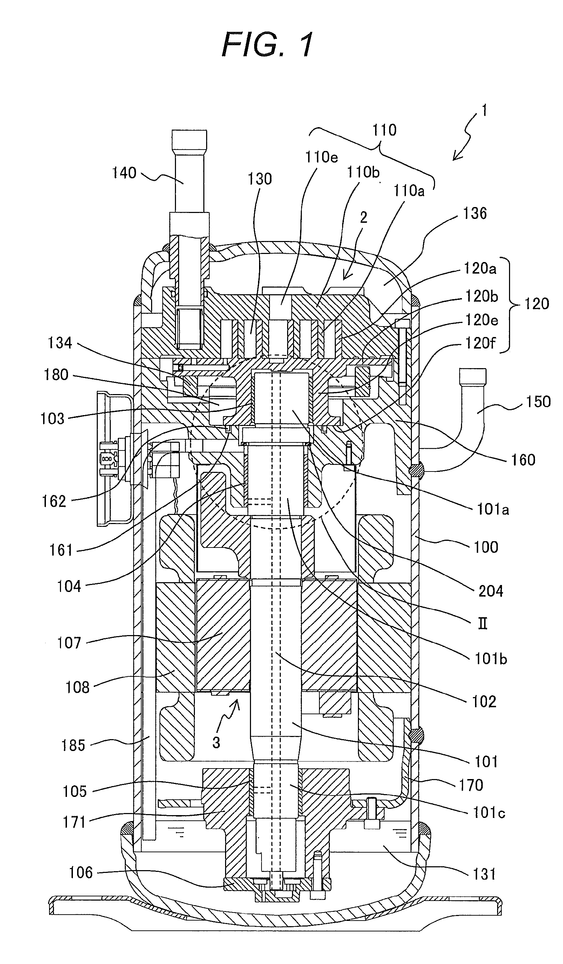

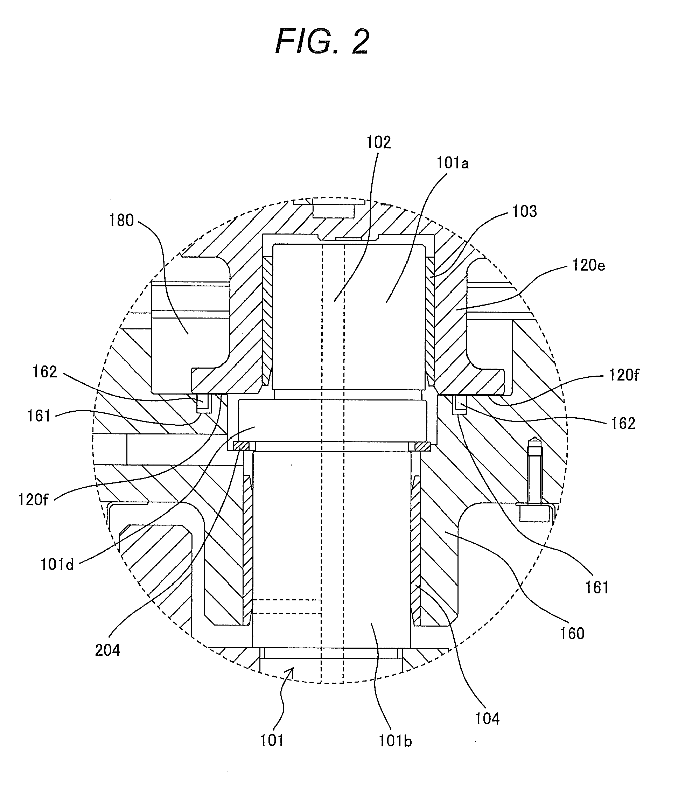

Hereinafter, a specific embodiment of a refrigerant compressor of the present invention will be described with reference to the drawings. Note that portions denoted with the same reference sign represent the same portion in Figs. 1 and 2.

### [Embodiment 1]

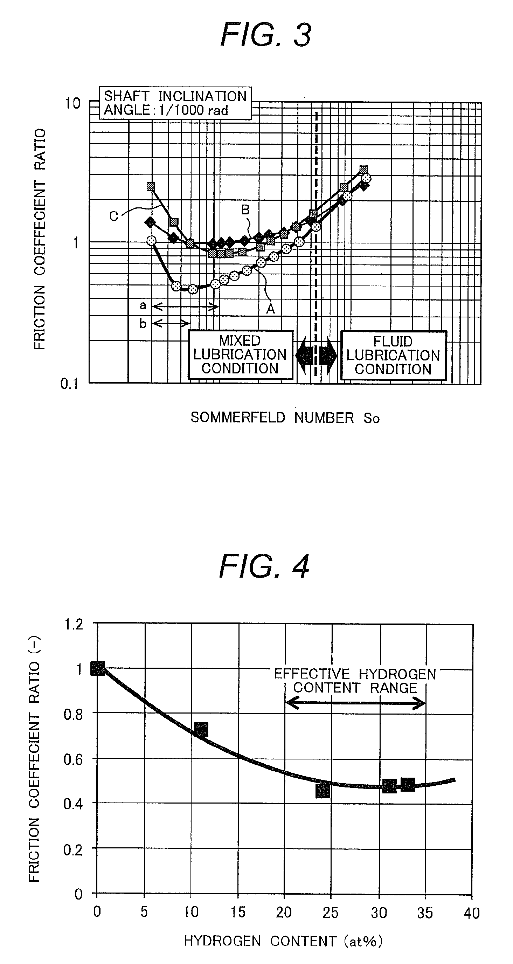

An embodiment 1 of a refrigerant compressor of the present invention will be described with reference to Figs. 1 to 4. Fig. 1 is a vertical cross sectional view illustrating an embodiment 1 of a refrigerant compressor of the present invention, Fig. 2 is an enlarged cross sectional view illustrating an enlarged II portion of Fig. 1, Fig. 3 is a diagram illustrating comparison of frictional properties of bearing sliding portions, and Fig. 4 is a diagram describing a relationship between hydrogen content and a friction coefficient of a DLC film.

In the present embodiment, an example of a case where a present invention is applied to a scroll compressor as the refrigerant compressor will be described. First, a basic configuration of the scroll compressor will be described with reference to Fig. 1.

A scroll compressor 1 includes a compressor mechanism part 2 including a fixed scroll 110, a orbiting scroll 120, and the like, a driving part 3 for driving the compressor mechanism part 2, and the like, and these devices are provided inside a sealed case (chamber) 100. The driving part 3 includes a motor made of a rotor 107 and a stator 108, a crank shaft 101 integrally rotating with the rotor 107 of the motor, and the like.

Further, a frame 160 provided with a main bearing 104 that supports the compressor mechanism part 2 and rotatably supports a main shaft part 101b of the crank shaft 101 is fixed in the sealed case 100 by means of welding and the like. Further, a lower frame 170 is also attached to a lower part in the sealed case 100 by means of welding and the like, and a sub bearing housing 171 provided with a sub bearing 105 for rotatably supporting a sub shaft part 101c at a lower part of the crank shaft 101 is attached to the lower frame 170.

The fixed scroll 110 includes a mirror plate 110b, a swirl body (scroll lap) 110a provided in the mirror plate 110b in a standing manner, a discharge port 110e provided approximately in the center of the mirror plate 110b, and the like. In addition, the orbiting scroll 120 includes an end plate (mirror plate) 120b, a swirl body (scroll lap) 120a provided in the end plate 120b in a standing manner, a bearing boss part 120e provided in the center of a back surface side of the end plate 120b, and the like. The swirl body 110a of the fixed scroll 110 and the swirl body 120a of the orbiting scroll 120 are engaged, so that a compression chamber 130 is formed.

A orbiting scroll bearing 103 is fixedly provided in the bearing boss part 120e of the orbiting scroll 120, and an eccentric part 101a of the crank shaft 101 is inserted to the orbiting scroll bearing 103. In addition, the reference sign 134 represents an Oldham-coupling ring, and a key of the Oldham-coupling ring 134 is engaged with a key groove formed in a back surface of the end plate 120b of the orbiting scroll and with a key groove formed in the frame 160. With such a structure, when the crank shaft 101 rotates and the eccentric part 101a is subjected to an eccentric motion, the orbiting scroll 120 revolves without rotating.

A suction pipe 140 that sucks a refrigerant gas and a discharge pipe 150 that discharges a compressed refrigerant gas are attached to the sealed case 100. When the orbiting scroll 120 is revolved by the driving part 3, the refrigerant gas is sucked through the suction pipe 140, passes through a suction part formed at an outer periphery side of the fixed scroll 110, is taken in to the compression chamber 130 and is compressed, and is then discharged from the discharge port 110e to the discharge chamber 136 at an upper part of the sealed case 100. The refrigerant gas discharged to the discharge chamber 136 passes through a groove (not illustrated) in the shaft direction formed in an outer peripheries of the fixed scroll 110 and the frame 160, flows in a lower space of the frame 160, and is discharged from the discharge pipe 150.

An oil reservoir 131 is formed in a bottom part of the sealed case 100, and the oil stored here passes through an oil supply passage 102 formed inside the crank shaft 101, by an oil supply pump 106 provided at a lower end part of the crank shaft 101, and is supplied to the orbiting scroll bearing 103, the main bearing 104, and the sub bearing 105. The oil that has lubricated the sub bearing 105 is directly returned to the oil reservoir 131, and the oil that has lubricated the main bearing 104 passes through an oil pipe 185 and is returned to the oil reservoir 131. After the oil supplied to a space of the bearing boss part at an upper end part of the eccentric part 101a lubricates the orbiting bearing 103, most of the oil passes through the oil pipe 185 and is returned to the oil reservoir 131. A part of the oil passes through an oil supply groove 120f, and flows into a back pressure chamber 180 formed at a back surface of the end plate of the orbiting scroll 120. The back pressure chamber 180 is formed of the fixed scroll 110, the orbiting scroll 120, and the frame 160.

The oil supply groove 120f is formed in a lower surface of the bearing boss part 120e in a radial direction as illustrated in Fig. 2. A circumferential groove 161 is formed in a part of the frame 160 facing the lower surface of the bearing boss part 120e so that a large amount of oil does not flow from the oil supply groove 120f to the back pressure chamber 180, and a seal ring 162 is mounted to the circumferential groove 161. Accordingly, a space at a discharge pressure at an inner periphery side of the seal ring 162 and a space (back pressure chamber) at an outer periphery side of the seal ring 162 are sealed, and the oil in the space at the inner periphery side of the seal ring 162 flows into the back pressure chamber 180 side only through the narrow oil supply groove 120f.

The oil supplied to the back pressure chamber 180 lubricates a sliding portion of the Oldham-coupling ring 134, and the like, is then supplied to the compression chamber 130 through a back pressure valve passage (not illustrated) provided with a back pressure control valve, and the like, lubricates sliding portions of the swirl bodies 110a and 120a, and the like, and is discharged to the discharge chamber 136 together with a compressed refrigerant gas. Then, the oil flows into a lower space of the frame 160, is separated from the refrigerant gas, and is returned into the oil reservoir 131.

The pressure of the back pressure chamber 180 is controlled to an intermediate pressure between a suction pressure and a discharge pressure by the back pressure control valve (differential pressure control mechanism) (not illustrated). In addition, since the oil at a discharge pressure is supplied to the space within the bearing boss part 120e (bearing boss part space), the space is at the discharge pressure. By the pressure of the bearing boss part space at the discharge pressure and the pressure of the back pressure chamber 180 controlled to the intermediate pressure, the end plate 120b of the orbiting scroll 120 is pressed to the fixed scroll 110 in close contact.

Note that the reference sign 204 represents a thrust bearing provided in a part of the frame 160 facing a flange part 101d provided in the crank shaft 101.

A compression operation of the scroll compressor structured as described above will be described. When the rotor 107 and the crank shaft 101 are rotated by driving the motor, the orbiting scroll 120 starts to be revolved associated with the rotation. With this revolving, the refrigerant gas sucked through the suction pipe 140 is taken in to the compression chamber 130 formed of the swirl body 120a of the orbiting scroll 120 and the swirl body 110a of the fixed scroll 110 being meshed with each other, and the volume is decreased as the compression chamber 130 moves in the center direction, so that the compression operation is performed. The refrigerant gas compressed to a high pressure is discharged from the discharge port 110e of the fixed scroll 110 to the sealed case 100, and is finally discharged outside through the discharge pipe 150.

The oil that has lubricated the orbiting scroll bearing 103, the main bearing 104, and the like is supplied to the back pressure chamber 180 through the oil supply groove 120f formed in an end surface of the bearing boss part 120e. The refrigerant gas is included in the oil, and when the oil flows into the back pressure chamber 180 at a lower pressure than the discharge pressure, the gas included in the oil expands and increases the pressure in the back pressure chamber 180. However, the pressure of the back pressure chamber 180 is controlled by the back pressure control valve (differential pressure control mechanism) to maintain a constant pressure difference with respect to the suction pressure. This pressure is an intermediate pressure between the suction pressure and the discharge pressure, and can press the orbiting scroll 120 into the fixed scroll 110 with appropriate pressing force.

Next, load application and a contact state in a bearing in the scroll compressor will be described. When the crank shaft 101 rotates, centrifugal force of the orbiting scroll 120 and gas compression force acting on the orbiting scroll 120 act on the crank shaft 101 through the orbiting bearing 103. Therefore, in the crank shaft 101, a load acts on the eccentric part 101a positioned at an end part in a direction perpendicular to the shaft direction. Since such a load acting on the eccentric part 101a, the crank shaft 101 goes into so-called a cantilever state. Since the crank shaft 101 in the cantilever state is supported by the main bearing 104 and the sub bearing 105, the crank shaft 101 is elastically deformed in the direction perpendicular to the shaft direction, and causes deflection.

Due to the deflection, the crank shaft 101 causes slight inclination in each of the orbiting scroll bearing 103, the main bearing 104, and the sub bearing 105, and so-called partial contact in which the shaft obliquely comes in contact with the bearing is more likely to occur. Especially, since it is structured such that the main bearing 104 and the sub bearing 105 positioned at both sides of the motor take care of the crank shaft 101, the inclination and partial contact are more likely to occur in the eccentric part 101a and the main shaft part 101b.

Therefore, in the scroll compressor of the present embodiment, the unleaded resin impregnation material having a soft surface and capable of elastic deformation against the partial contact of the shaft is used for the orbiting scroll bearing 103 and the main bearing 104. Accordingly, the solid contact of the shaft and the bearing can be avoided and an oil film can be formed. The unleaded resin impregnation material uses, for example, PTFE (polytetrafluoroethylene) as the resin material, and is impregnated on a porous bronze-based alloy. As the resin material, other than the above, POM (polyacetal), PBT (polybutylene terephthalate), PPS (polyphenylene sulfide), PEEK (polyetheretherketone), and the like can also be used.

Further, in the present embodiment, a hard DLC (diamond-like carbon) film described below is used for the shaft side facing the bearing using the unleaded resin impregnation material. To avoid the partial contact of the shaft and to prevent an increase in friction loss due to the contact in the bearing, combination of the shaft and the bearing becomes important.

Further, assembling errors of the scroll compressor are easily accumulated in the sub bearing 105. Therefore, a rolling bearing is frequently used to allow the assembling errors to some extent. However, the rolling bearing is expensive, and thus, when an inexpensive sliding bearing is used, an increase in friction loss due to the contact in the bearing can be suppressed by decreasing the assembling errors as much as possible, and preventing the partial contact in the bearing by avoiding inclination arrangement of the crank shaft 101. However, to improve the assembly accuracy, large-scale work associated with large-scale change of manufacturing processes is required.

Therefore, by having the combination of the shaft and the bearing that can allow some assembling errors, suppress an increase in friction loss even if the partial contact is caused, and assure reliability, a highly efficient, reliable, inexpensive compressor can be realized. Therefore, in the present embodiment, the PTFE based unleaded resin impregnation material is also used for the sub bearing 105, similarly to the turning bearing 103 and the main bearing 104, and the inclination of the shaft within the sliding bearing can be allowed.

Typically, a tin-copper-antimony (Sn-Cu-Sb) based alloy, called white metal, is often used for the sliding bearing material of industrial machinery. Alternatively, copper (Cu) based or aluminum (Al) based soft metal may be used. The soft metal material having a low melting point and the relatively hard shaft are combined and used to prevent occurrence of burning and the like when the shaft and the bearing come in contact.

However, in a machine like the scroll compressor to which a cantilever load is applied, the soft metal material cannot satisfy the abrasion resistance and the burning resistance due to the above-described partial contact problem, and thus, cannot be employed.

Therefore, as a result of various examinations of the combination of the shaft and the bearing in the machine like the scroll compressor, to which a cantilever load is applied, it has been found out that the following combination is favorable: a unleaded resin impregnation material is used for the sliding bearing, the crank shaft is made of a ferrous material, and a hard carbon film including hydrogen is formed on a part of the crank shaft sliding with the sliding bearing using the unleaded resin impregnation material. With such combination, even in a case where the compressor is used in an inclination contact state such as the partial contact, or in a ultra-low speed operation of about less than 20 Hz, for example, about 3 to 10 Hz, where the solid contact may be caused between the shaft and the bearing, a low friction loss can be realized and the burning can also be prevented. Therefore, by applying the present embodiment, a refrigerant compressor that is efficient in an ultra-low speed operation and capable of wide range drive from a ultra-low speed to a ultra-high speed can be realized.

To enhance the efficiency in an actual operation in the scroll compressor, it is necessary to further enhance the operation efficiency in the low load area. Therefore, it is necessary to make the compression chamber volume smaller than a conventional one, to make the operation frequency operable in a lower range, and to enable a high speed operation so as to deal with an operation in the high load area.

To respond to the demand, in the present embodiment, a hard carbon film is provided in the crank shaft 101 as the slide member. However, to enhance the efficiency in the low load operation, it is necessary to decrease in friction coefficient of the sliding portion in the low speed operation. Therefore, it has been found out that consideration to the component configuration of the hard carbon film formed on a part of the crank shaft sliding with the sliding bearing is important.

That is, it has been found out that the bearing part is subject to mixed lubrication and solid contact is caused especially in an ultra-low speed operation. When the solid contact is caused, the friction coefficient of the sliding portion is increased and the efficiency in the low load operation is reduced. Therefore, the power consumption in the low load area in the operation cannot be sufficiently reduced. Therefore, for the improvement of efficiency in the low load area in the operation, it is necessary that the operation can be realized with a small friction coefficient even in an ultra-low speed operation where the bearing part is operated the mixed lubrication condition.

Then, as a result of various examinations, it has turned out that the component configuration of the hard carbon film substantially affects the frictional properties in the mixed lubrication condition. That is, it has been found out that, when a DLC film that belongs to the hard carbon film is used, the amount of hydrogen contained in the film substantially affect the frictional properties in the mixed lubrication condition.

Fig. 2 is an enlarged cross sectional view of the II portion illustrated in Fig. 1. In the present embodiment, the crank shaft 101 uses a ferrous material as a base material, and a hard carbon film (DLC film) made of DLC is formed on a surface of the eccentric part 101a sliding with the orbiting bearing 103 and a surface of the main shaft part 101b sliding with the main bearing 104. Further, in the present embodiment, to enhance the adhesiveness of the DLC film with respect to the base material of the ferrous material, a chromium nitride (CrN) layer as the intermediate layer is provided between the base material and the DLC film. That is, the crank shaft 101 made of the ferrous material is used as the base material, the intermediate layer of the chromium nitride (CrN) is first formed on the base material, and the hard carbon film layer (DLC layer) made of the DLC film is formed on the intermediate layer.

Further, in the present embodiment, an intermediate layer and a DLC layer similar to the above described layers are formed on a surface of the sub shaft part 101c facing the sub bearing 105 using the unleaded resin impregnation material.

Note that the intermediate layer may be made of metal such as chrome (Cr) or titanium (Ti), titanium nitride (TiN), or titanium carbide (TiC). In addition, if the hard carbon film layer is formed of an inclination layer made of a mixture of carbon and metal, in which the content of the metal such as chrome (Cr) or titanium (Ti) is decreased from the base material toward an outside and the content of carbon is increased from the base material toward an outside, or of an inclination layer made of metal carbide, the adhesiveness of the hard carbon film layer with respect to the base material can be further enhanced.

Further, in the DLC layer, SP² bond carbon and SP³ bond carbon are mixed. However, in the present embodiment, the DLC layer is further formed of a hard carbon film including hydrogen. A hard carbon film including the hydrogen content of 20 to 35 atom% is used. The DLC film containing such hydrogen content can be obtained by forming a film by a plasma CVD method (plasma-enhanced chemical vapor deposition method), a UBMS method (unbalanced magnetron sputtering method) in which hydrogen is introduced during film formation, and the like.

Fig. 3 is a diagram illustrating comparison between the frictional properties in the bearing sliding portion of the present embodiment 1 and the frictional properties in a conventional bearing sliding portion. In Fig. 3, the curved line A illustrates the frictional properties in the bearing sliding portion of the present embodiment, and the curved lines B and C illustrate the frictional properties in the conventional bearing sliding portion.

The configurations of the bearing sliding portions corresponding to the curved lines A to C use the same PTFE based unleaded resin impregnation material for the sliding bearing side. Further, as for the shaft side sliding with the sliding bearing, the curved line B illustrates a measured value in a case where the ferrous base material is used as it is, and the curved line C illustrates a measured value in a case where a DLC film having the hydrogen content of 0 atom% is formed on the ferrous base material is used. The case of the curved line C corresponds to the one disclosed in Japanese Patent Application Laid-Open No. 2012-36878. In contrast, the case of the present embodiment by the curved line A illustrates a measured value when a DLC film having the hydrogen content of 24 atom% is formed on the ferrous base material is used. Note that, in measuring a friction coefficient, the friction coefficient is measured where a shaft inclination angle is 1/1000 rad in all cases.

In Fig. 3, the horizontal axis represents a Sommerfeld number that is a dimensionless number indicating the bearing properties, and the Sommerfeld number is obtained by a definition formula: "(c/D)²×η×N/P" ((bearing clearance/shaft diameter)² × oil viscosity × rotation speed/bearing surface pressure). Further, the vertical axis represents the friction coefficient ratio that is comparison of the friction coefficients where the smallest value among the friction coefficients measured in the case of the curved line B is 1.

As is clear from the definition formula of the Sommerfeld number, under a low speed condition where the rotation speed is small, the Sommerfeld number is small, and the compressor goes under the mixed lubrication condition illustrated in Fig. 3. In this mixed lubrication condition, the present embodiment illustrated by the curved line A can substantially reduce the friction coefficient than the conventional ones illustrated by the curved lines B and C. Especially, it has turned out that, in the area of the ultra-low speed operation corresponding to the rotation speed of less than 20 Hz (see the area illustrated by "a" in Fig. 3), the friction coefficient can be decreased by half compared with the conventional ones. In addition, even in the operation area of a special ultra-low speed such as 3 to 10 Hz (see the area illustrated by "b" in Fig. 3), substantial reduction of the friction coefficient can be realized compared with the conventional ones.

As is clear from the drawing, according to the present embodiment, the friction coefficient in the bearing sliding portion under a low load condition such as being operated at an ultra-low speed can be substantially reduced. As a result, the friction loss under the low load condition can be reduced by half, and the compressor efficiency can be substantially improved.

Fig. 4 is a diagram describing a relationship between the hydrogen content and the friction coefficient of the DLC film formed at the shaft side in the bearing sliding portion, and illustrates results obtained such that the friction coefficients under the low load condition are measured and compared with respect to the DLC films containing various amounts of the hydrogen content. Note that the curved line illustrated in Fig. 4 indicates data under the condition of a minimum friction coefficient.

From Fig. 4, it has been found out that the DLC films having the hydrogen content in the range of 20 to 35 atom% can reduce the friction coefficient about by half compared with the DLC films having the hydrogen content of 0 atom%.

Under the low load condition, the ratio of the friction loss to the power consumption of the compressor is small. Therefore, to obtain an effect of substantial enhancement of the efficiency, reduction of the friction coefficient about by half is necessary. Therefore, in the present embodiment, the hydrogen content in the DLC film is 20 to 35 atom%, whereby the effect of substantial enhancement of the efficiency can be obtained.

As described above, the present embodiment employs the scroll compressor in which the DLC film having the hydrogen content of 20 to 35 atom% is formed on each bearing sliding portion of the crank shaft 101 and the sliding bearing uses the unleaded resin impregnation material. Therefore, in the low load condition where the compressor is operated at a low speed, especially at a ultra-low speed less than 20 Hz, the friction can be reduced about by half compared with a case where the surface of the crank shaft is the same as a conventional surface made of a ferrous material, or the surface is made by forming a DLC film not containing hydrogen. In addition, because of the effect of the DLC as a hard film, the adhesion abrasion between the slide members can be prevented, and the burning resistance and the abrasion resistance can be enhanced, whereby a highly reliable scroll compressor (refrigerant compressor) can be obtained even in a middle speed operation or a high speed operation.

As a result, a wide range operation (in a driving signal to the motor, the frequency is about 10 to 150 Hz) becomes possible, where the compressor is downsized to deal with a low load, the operation frequency is operable in the ultra-low speed, and the ultra-high speed operation is also available to deal with a high load. Further, since the efficiency in the low load operation can be substantially improved, highly efficient compressor performance can be especially obtained in an actual operation where the compressor is often operated in the low load operation.

According to the refrigerant compressor of the above-described present embodiment, in the refrigerant compressor capable of wide range drive where the compressor is operated from a low speed to a high speed, the friction loss in the low speed operation which may be a mixed lubrication area can be substantially reduced, whereby a highly efficient refrigerant compressor in the low speed operation can be obtained.

That is, according to the present embodiment, even in a case where the compressor is operated under the mixed lubrication condition where partial contact (solid contact) of the shaft and the bearing occurs in the low speed operation, the friction coefficient can be reduced by about half compared with conventional ones, whereby a substantial increase in efficiency in the low speed operation can be realized.

In addition, according to the present embodiment, even in a compressor in which the partial contact easily occurs in the bearing, occurrence of the burning and the abrasion can be suppressed. Therefore, a highly reliable refrigerant compressor can be obtained not only in the low speed operation, but also even in the high speed operation, or in the ultra-high speed operation of about 150 Hz.

Especially, according to the present embodiment, even in the ultra-low speed operation where the rotation speed is less than 20 Hz, for example, 3 to 10 Hz, the high efficiency can be obtained, and a refrigerant compressor having an excellent reduction effect of the power consumption in the ultra-low speed operation can be obtained. Further, since the reliability can be secured even in the high speed operation, a refrigerant compressor operated in a wide range from the ultra-low speed operation to the high speed operation can be realized.

Note that the present invention is not limited to the above-described embodiments and includes various modifications.

For example, in the above-described embodiment, the scroll compressor has been described as the refrigerant compressor. However, the refrigerant compressor is not limited to the scroll compressor. That is, the present invention is applicable to a compressor, in which a load acts on a crank shaft in a partially contact state like the present embodiment and the shaft easily comes in contact in a partially contact state in the bearing, for example, to a reciprocating compressor used in a refrigerator for household use, and the like, and similar effect can be obtained.

Further, even a rotary compressor easily gets partial contact in the bearing and has a similar problem to the scroll compressor as long as one having a rotor being supported in a cantilever state. Therefore, similar effect can be obtained by applying the present invention.

Further, the description of embodiments have been given for easy understanding of the present invention, and the present invention is not necessarily limited to one including all described configurations.

## Claims

1. A refrigerant compressor comprising:
a compressor mechanism part (2), and a motor and a crank shaft (101) for driving the compressor mechanism part (2), in a sealed case (100), and
a sliding bearing at least either in an engagement part between the compressor mechanism part (2) and the crank shaft (101) or in a rotation support part of the crank shaft (101), wherein:
an unleaded resin impregnation material is used for at least one of the sliding bearings,
the crank shaft (101) is made of a ferrous material, and
a hard carbon film including hydrogen is formed on a part of the crank shaft (101) sliding with the sliding bearing using the unleaded resin impregnation material.

2. The refrigerant compressor according to claim 1, wherein:
the hard carbon film is a diamond-like carbon film.

3. The refrigerant compressor according to claim 2, wherein:
hydrogen content of the diamond-like carbon film is 20 to 35 atom%.

4. The refrigerant compressor according to at least one of claims 1 to 3, wherein:
the compressor mechanism part (2) includes a orbiting scroll and a fixed scroll,
the crank shaft (101) has a structure to include an eccentric part at one end side, and to engage the eccentric part with an orbiting scroll bearing (103) provided in the orbiting scroll,
a sliding bearing using an unleaded resin impregnation material is used for the orbiting scroll bearing (103), and
a hard carbon film including hydrogen is formed on the eccentric part of the crank shaft (101) sliding with the sliding bearing.

5. The refrigerant compressor according to at least one of claims 1 to 4, wherein:
the crank shaft (101) has a structure to be supported by a main bearing (104) provided in a frame (160) attached to the sealed case (100) and a sub bearing (105) provided in a lower frame (170) attached to the sealed case (100),
a sliding bearing using an unleaded resin impregnation material is used for the sub bearing (105), and
a hard carbon film including hydrogen is formed on a sub shaft part (101c) of the crank shaft (101) sliding with the sliding bearing.

6. The refrigerant compressor according to at least one of claims 1 to 5, wherein:
the crank shaft (101) has a structure to be supported by a main bearing (104) provided in a frame attached to the sealed case (100) and a sub bearing (105) provided in a lower frame attached to the sealed case,
a sliding bearing using an unleaded resin impregnation material is used for the main bearing (104), and
a hard carbon film including hydrogen is formed on a main shaft part (101b) of the crank shaft (101) sliding with the sliding bearing.

7. The refrigerant compressor according to at least one of claims 1 to 6, wherein:
the crank shaft (101) has a structure to be supported by a main bearing provided to a frame attached to the sealed case and a sub bearing provided in a lower frame attached to the sealed case,
sliding bearings using an unleaded resin impregnation material are used for the main bearing (104) and the sub bearing (105), and
hard carbon films including hydrogen are formed on a main shaft part (101b) and on a sub shaft part (101c) of the crank shaft sliding with these sliding bearings.
